# EUROPÄISCHE PATENTSCHRIFT

(11) **EP 4 357 727 B1**
(45) Veröffentlichungstag und Bekanntmachung des Hinweises auf die Patenterteilung: **03.09.2025**
(21) Anmeldenummer: 23197855.2
(22) Anmeldetag: 18.09.2023
(51) Int. Cl.: G01B 5/06, B65G 43/08, G01B 5/207

(54) **HÖHENABTASTVORRICHTUNG**
HEIGHT SENSING APPARATUS
DISPOSITIF DE DETECTION DE HAUTEUR

(30) Priorität: 21.10.2022 DE 202022105941 U
(43) Veröffentlichungstag der Anmeldung: 24.04.2024
(73) Patentinhaber: Schröder Maschinenbau GmbH, 33824 Werther (DE)
(72) Erfinder: Lipsch, Peter, 33824 Werther (DE)
(74) Vertreter: Ter Meer Steinmeister & Partner

(56) Entgegenhaltungen:
- EP-A1- 1 110 626
- CH-A5- 638 378
- CH-A5- 646 309
- DE-A1- 102012 220 174
- DE-A1- 19 819 728
- DE-B3- 102009 022 415

## Beschreibung

Die Erfindung betrifft eine Höhenabtastvorrichtung zur Bestimmung der Höhe von auf einem Förderer liegenden Produkten, mit einer Tasteinrichtung, die durch die auf dem Förderer transportierten Produkte auslenkbar ist, und mit einer Sensoreinrichtung zur Erfassung der Auslenkung der Tasteinrichtung, wobei die Tasteinrichtung mehrere Tastelemente aufweist, die unabhängig voneinander schwenkbar auf einer gemeinsamen, oberhalb des Förderers quer zu dem Förderer verlaufenden Achse angeordnet sind, und die Sensoreinrichtung dazu ausgebildet ist, das Maximum der Auslenkungen der Tastelemente zu messen.

Ein Beispiel einer Anlage, in der eine solche Höhenabtastvorrichtung eingesetzt werden kann, ist eine Pökelanlage, mit der Pökellake mit Hilfe von vertikalbeweglichen Nadeln in Fleischprodukte injiziert wird, die auf dem Förderer zugeführt werden. Mit Hilfe der Höhenabtastvorrichtung lässt sich dann die Höhe des Pökelgutes ermitteln, so dass die Hubhöhe der Nadeln bedarfsgerecht angepasst werden kann.

Aus EP 1 110 626 A1 ist eine Höhenabtastvorrichtung dieser Art bekannt.

Aufgabe der Erfindung ist es, eine mechanische Höhenabtastvorrichtung zu schaffen, die eine besonders leichtgängige Auslenkung der Tastelemente ermöglicht.

Diese Aufgabe wird erfindungsgemäß dadurch gelöst, dass die Sensoreinrichtung eine parallel zu der Achse verlaufende Fühlerstange aufweist, die, wenn sich alle Tastelemente in ihrer nicht ausgelenkten Gleichgewichtsstellung befinden, an diesen Tastelementen anliegt und die ihrerseits durch das am stärksten ausgelenkte Tastelement auslenkbar ist, wobei die Sensoreinrichtung dazu ausgebildet ist, die Auslenkung der Fühlerstange zu messen, und dass jedes Tastelement einen länglichen Finger aufweist, der sich von der Achse aus in Richtung auf den Förderer erstreckt, und ein Endabschnitt jedes Tastelements, der sich auf der dem Finger entgegengesetzten Seite der Achse befindet, als Gegengewicht zum Ausbalancieren des Tastelements ausgebildet ist.

Eine vorteilhafte Ausgestaltung ist im Unteranspruch 2 angegeben.

Im folgenden werden Ausführungsbeispiele anhand der Zeichnung näher erläutert.

Es zeigen:
- Fig. 1: einen schematischen Längsschnitt durch einen Teil eines Förderers mit einer erfindungsgemäßen Höhenabtastvorrichtung;
- Fig. 2: eine perspektivische Darstellung wesentlicher Teile der Höhenabtastvorrichtung; und
- Fig. 3: einen schematischen Schnitt analog zu Fig. 1, zur Illustration der Arbeitsweise der Höhenabtastvorrichtung.

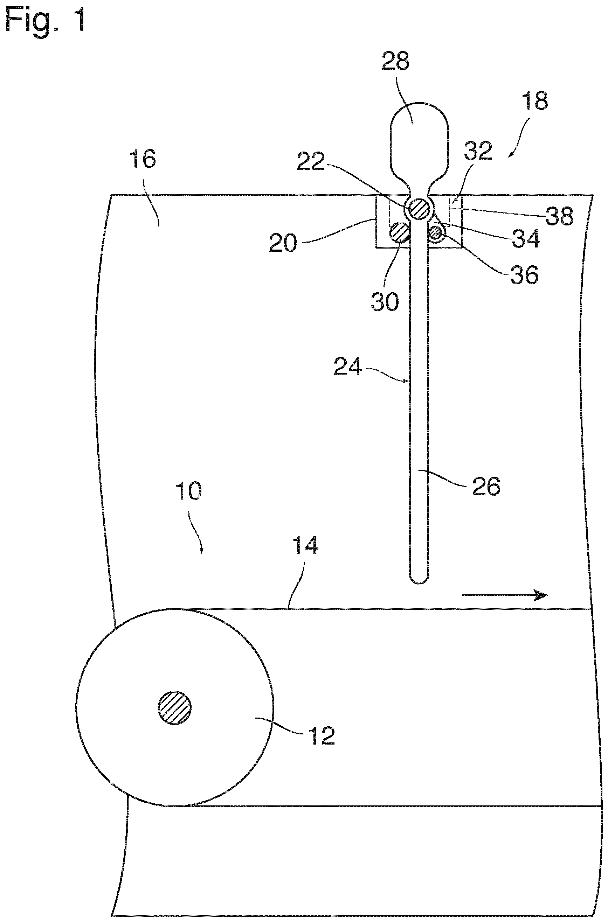

In Fig. 1 ist ein Teil eines Förderers 10 gezeigt, der durch ein über eine Umlenkrolle 12 laufendes endloses Förderband 14 gebildet wird. Die Förderstrecke wird auf beiden Seiten durch vertikale Wände 16 begrenzt, von denen in der Schnittdarstellung in Fig. 1 nur eine sichtbar ist. In diesen Wänden 16 sind die Enden der Umlenkrolle 12 gelagert.

Oberhalb des Förderbandes 14 ist an den Wänden 16 eine Höhenabtastvorrichtung 18 gehalten, deren Aufbau im folgenden näher beschrieben werden soll.

An jeder Wand 16 ist ein Lagergehäuse 20 montiert. In diesen Lagergehäusen 20 sind die Enden einer Achse 22 gehalten, die sich quer zu der durch einen Pfeil angegebenen Transportrichtung des Förderers 10 zwischen den Wänden 16 erstreckt und eine Vielzahl von über die Breite des Förderers verteilten Tastelementen 24 trägt. Die Tastelemente 24 sind frei drehbar auf der Achse 22 gelagert, so dass sie unabhängig voneinander ausgelenkt werden können. Jedes Tastelement 24 weist einen langgestreckten Finger 26 auf, der sich von der Achse 22 aus nach unten erstreckt und in einer bekannten Höhe dicht oberhalb des Förderbandes 14 endet. Ein oberhalb der Achse 22 liegendes Ende jedes Tastelements 24 ist verdickt und bildet ein Gegengewicht 28, mit dem das Tastelement so ausbalanciert wird, dass sein Schwerpunkt dicht unterhalb der Achse 22 liegt. So ist sichergestellt, dass die Tastelemente 24 aufgrund ihres Eigengewichts eine vertikale Position einnehmen, wie sie in Fig. 1 gezeigt ist, sich jedoch andererseits leicht aus dieser Gleichgewichtslage auslenken lassen.

In der Gleichgewichtslage liegen die Finger 26 an einem Anschlag 30 an, der durch eine von einem Lagergehäuse 20 zum anderen verlaufende Stange gebildet wird und die Schwenkbewegung der Finger 26 in der Richtung entgegen der Transportrichtung begrenzt. In der entgegengesetzten Richtung, also in Transportrichtung, sind die Finger 26 frei auslenkbar.

Die Lagergehäuse 20 nehmen Teile einer Sensoreinrichtung 32 auf, mit der die Auslenkung des am stärksten ausgelenkten Fingers 26 gemessen werden kann. Zu diesem Zweck ist in jedem Lagergehäuse 20 ein Lenker 34 derart schwenkbar gelagert, dass er um die Achse 22 schwenken kann. Die beiden Lenker 34 sind durch eine Fühlerstange 36 verbunden, die zusammen mit den beiden Lenkern 34 einen starren, um die Achse 22 schwenkbaren Messbügel bildet. Zu der Sensoreinrichtung 32 gehört weiterhin ein Drehwinkelsensor 38, der in einem der Lagergehäuse 20 untergebracht ist und dazu dient, den Drehwinkel des dortigen Lenkers 34 zu messen.

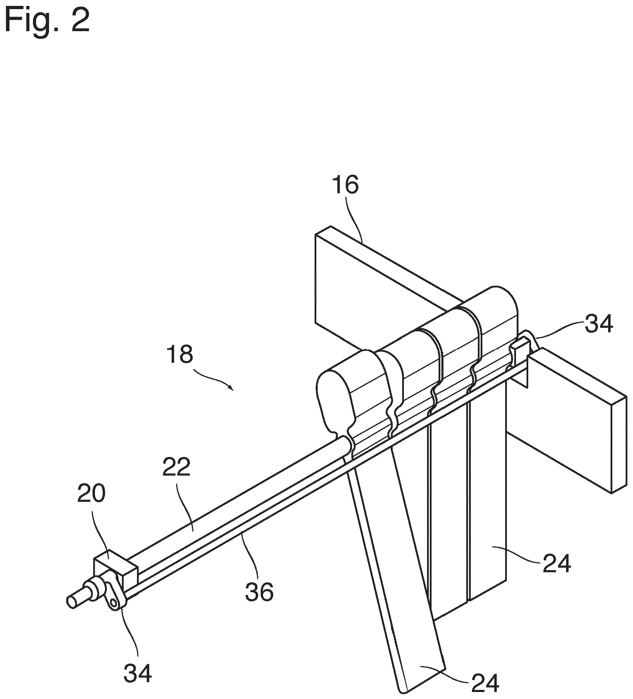

In Fig. 2 sind ein Teil einer der Wände 16 sowie Teile der Höhenmessvorrichtung 18 in einer perspektivischen Ansicht gezeigt. Insbesondere sieht man hier vier der Tastelemente 24, von denen eines sich im ausgelenkten Zustand befindet. Ebenso sind die Fühlerstange 36 und die Lenker 34 erkennbar, die durch das ausgelenkte Tastelement 24 verschwenkt wurden. Der Anschlag 30 ist dagegen in Fig. 2 durch die Achse 22 verdeckt.

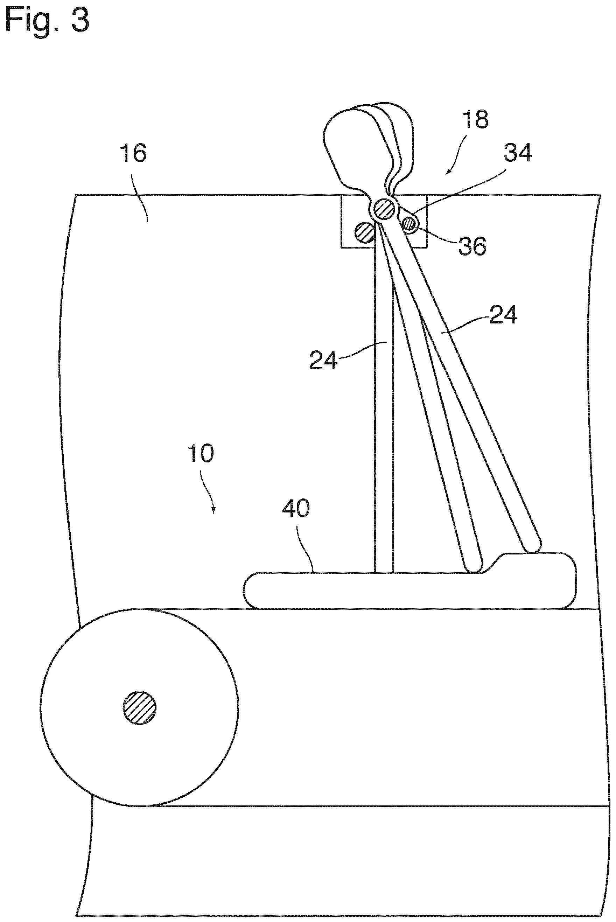

In Fig. 3 ist der Förderer 10 in einem Zustand gezeigt, in dem gerade ein Produkt 40 unter der Höhenmessvorrichtung 18 hindurchläuft. Diejenigen Tastelemente 24, die sich in Querrichtung des Förderers in der Position des Produktes 40 befinden, wurden durch das Produkt ausgelenkt, während andere Tastelemente 24, die sich in der Blickrichtung in Fig. 3 hinter dem Produkt 40 befinden, weiterhin ihre vertikale Gleichgewichtsstellung einnehmen. Fig. 3 zeigt außerdem ein Tastelement, das sich zwar auch über dem Produkt 40 befindet aber hinter dem höchsten Punkt des Produkts liegt und deshalb weniger weit ausgelenkt ist. Der durch die Fühlerstange 36 und die Lenker 34 gebildete Messbügel wurde durch das am weitesten ausgelenkten Tastelement 24 verschwenkt. Der Winkel, um den die Lenker 34 verschwenkt wurden, wird mit dem Drehwinkelsensor 38 gemessen.

Der Drehwinkelsensor 38 liefert ein elektronisches Signal, das den Drehwinkel angibt, um den der Messbügel verschwenkt wurde. Eine nicht gezeigte elektronische Auswertungseinrichtung rechnet diesen Drehwinkel in die gemessene Höhe des Produkts 40 um. Die größte Höhe der oberen Oberfläche des Produkts 40, auf der die ausgelenkten Finger 26 aufliegen, ist gegeben durch die Höhe des unteren Endes der Finger 26 (in der Gleichgewichtsstellung) relativ zum Förderband 14 plus den Cosinus des Drehwinkels multipliziert mit der Länge der Finger 26.

## Patentansprüche

1. Höhenabtastvorrichtung zur Bestimmung der Höhe von auf einem Förderer (10) liegenden Produkten (40), mit einer Tasteinrichtung, die durch die auf dem Förderer (10) transportierten Produkte (40) auslenkbar ist, und mit einer Sensoreinrichtung (32) zur Erfassung der Auslenkung der Tasteinrichtung, wobei die Tasteinrichtung mehrere Tastelemente (24) aufweist, die unabhängig voneinander schwenkbar auf einer gemeinsamen, oberhalb des Förderers (10) quer zu dem Förderer verlaufenden Achse (22) angeordnet sind, und die Sensoreinrichtung (32) dazu ausgebildet ist, das Maximum der Auslenkungen der Tastelemente (24) zu messen, **dadurch gekennzeichnet, dass** die Sensoreinrichtung eine parallel zu der Achse (22) verlaufende Fühlerstange (36) aufweist, die, wenn sich alle Tastelemente (24) in ihrer nicht ausgelenkten Gleichgewichtsstellung befinden, an diesen Tastelementen anliegt und die ihrerseits durch das am stärksten ausgelenkte Tastelement (24) auslenkbar ist, wobei die Sensoreinrichtung (32) dazu ausgebildet ist, die Auslenkung der Fühlerstange (36) zu messen, und dass jedes Tastelement (24) einen länglichen Finger (26) aufweist, der sich von der Achse (22) aus in Richtung auf den Förderer (10) erstreckt, und ein Endabschnitt jedes Tastelements (24), der sich auf der dem Finger (26) entgegengesetzten Seite der Achse (22) befindet, als Gegengewicht (28) zum Ausbalancieren des Tastelements ausgebildet ist.

2. Höhenabtastvorrichtung nach Anspruch 1, bei der die Fühlerstange (36) starr zwischen Lenkern (34) gehalten ist, die um die Achse (22) schwenkbar sind, und bei der ein Drehwinkelsensor (38) dazu vorgesehen ist, die Winkelauslenkung mindestens eines der Lenker (34) zu messen.

## Claims

1. A height sensing apparatus for determining the height of products (40) lying on a conveyor (10), having a sensing device which can be deflected by the products (40) transported on the conveyor (10), and having a detector (32) for detecting the deflection of the sensing device, the sensing device having a plurality of sensing elements (24) which are pivotably arranged on a common axis (22) running transversely above the conveyor (10), the sensing elements being pivotable independently of one another, and the detector (32) being designed to detect a maximum of the deflection of the sensing elements (24), **characterized in that** the detector has a sensor rod (36) extending parallel to the axis (22), which, when all the sensing elements (24) are in their undeflected equilibrium position, rests against these sensing elements and which, for its part, can be deflected by the sensing element (24) which is deflected to the greatest extent, the detector (32) being designed to measure the deflection of the sensor rod (36), and **in that** each sensing element (24) has an elongate finger (26) which extends from the axis (22) towards the conveyor (10), and an end section of each sensing element (24), which is located on the side of the axis (22) opposite the finger (26), is designed as a counterweight (28) for balancing the sensing element.

2. The height sensing apparatus according to claim 1, wherein the sensing rod (36) is rigidly held between links (34) which are pivotable about the axis (22), and wherein a rotation angle sensor (38) is provided to measure the angular deflection of at least one of the links (34).

## Revendications

1. Dispositif de détection de hauteur pour déterminer la hauteur de produits (40) placés sur un convoyeur (10), comportant un dispositif de palpeur qui peut être dévié par les produits transportés sur le convoyeur (210), et comportant un dispositif de capteur (32) pour détecter la déviation du dispositif de palpeur, dans lequel le dispositif de palpeur comporte plusieurs éléments de palpeur (24) qui sont agencés de façon à pouvoir pivoter indépendamment les uns des autres sur un axe (22) commun au-dessus du convoyeur (10) et s'étendant transversalement au convoyeur, et le dispositif de capteur (32) est conçu de façon à mesurer le maximum de la déviation des éléments de palpeur (24), **caractérisé en ce que** le dispositif de capteur comporte une tige de palpeur (36) s'étendant parallèlement à l'axe (22) qui, lorsque tous les éléments de palpeur (24) sont dans leur position d'équilibre non déviée, vient en butée contre ces éléments de palpeur et qui peut être déviée, de son côté, par l'élément de palpeur (24) le plus fortement dévié, dans lequel le dispositif de capteur (32) est conçu de façon à mesurer la déviation de la tige de capteur (36), et **en ce que** chaque élément de palpeur (24) comporte un doigt longitudinal (26) qui s'étend à partir de l'axe (22) en direction du convoyeur (10), et une partie d'extrémité de chaque élément de palpeur qui se situe sur le côté de l'axe (22) opposé au doigt (26), est conçue comme un contrepoids (28) pour équilibrer l'élément de palpeur.

2. Dispositif de détection de hauteur selon la revendication 1, dans lequel la tige de palpeur (36) est rigidement maintenue entre des guides (34) qui peuvent pivoter autour de l'axe (22) et dans lequel un capteur d'angle de rotation (38) est prévu pour mesurer la déviation angulaire d'au moins un des guides (34).
